# EUROPÄISCHE PATENTSCHRIFT

(11) **EP 0 343 266 B1**
(45) Veröffentlichungstag und Bekanntmachung des Hinweises auf die Patenterteilung: **11.08.1993**
(21) Anmeldenummer: 88108252.3
(22) Anmeldetag: 24.05.1988
(51) Int. Cl.: B65B 9/04, B29C 65/20

(54) **Verfahren zum Herstellen von Folienbehälter und Vorrichtung zur Durchführung des Verfahrens**
Method for manufacturing containers from a web and apparatus for carrying out this method
Procédé pour fabriquer des récipients à partir d'une feuille en bande et installation pour la mise en oeuvre de ce procédé

(43) Veröffentlichungstag der Anmeldung: 29.11.1989
(73) Patentinhaber: Unionpack Industrielle Lohnverpackungs-GmbH, D-60386 Frankfurt (DE)
(72) Erfinder: Tschepke, Josef, D-6053 Obertshausen/Kreis Offenbach (DE); Oerther, Bernhard, D-6457 Maintal 1 (DE); Hintermaier, Eduard, D-6053 Obertshausen 1 (DE)
(74) Vertreter: Zapfe, Hans, Dipl.-Ing.

(56) Entgegenhaltungen:
- DE-A- 3 141 069
- FR-A- 2 056 902
- US-A- 3 782 066

## Beschreibung

Die Erfindung betrifft eine Verfahren zum Herstellen von mit fließfähigen Substanzen gefüllten, einen als Standfläche ausgebildeten Boden aufweisenden flaschenförmigen Folienbehältern durch
a) Tiefziehen mindestens eines Behälterteils pro Folienbehälter aus ebenem, verformbarem Folienmaterial mit einem zur Folienebene im wesentlichen senkrecht ausgerichteten Bodenteil, mit einem dem Bodenteil abgekehrten Halsabschnitt und mit außerhalb des Bodens am Umfang des Behälterteils überstehenden Randbereichen,
b) Herumklappen des Folienmaterials um eine im wesentlichen an der kantenförmigen Übergansstelle von Bodenteil und Folienebene liegende Faltlinie,
c) Verbinden der beiderseits der Faltlinie liegenden, nach dem Herumklappen in den Randbereichen aufeinander liegenden Folienteile vom Boden ausgehend bis mindestens etwa zum oberen Rand des Halsabschnitts durch einen ersten Verbindungsvorgang,
d) Füllen des Folienbehälters durch den Halsabschnitt und
e) Verschließen des Folienbehälters.

Ein derartiges Verfahren sowie ein durch das Verfahren hergestellter Folienbehälter sind durch die DE-A-10 55 802 bekannt. Mit dem bekannten Verfahren ist es jedoch zunächst nur möglich, innerhalb einer Folge von Verfahrensschritten einen leeren Folienbehälter herzustellen, der auf dem Gesamtumfang im Bereiche seiner Randflansche dicht versiegelt ist. Um den bekannten Folienbehälter zu füllen, muß der Flaschenhals abgeschnitten werden, und nach dem Füllvorgang muß ein Verschlußglied auf den Hals aufgebracht bzw. in ihn eingebracht werden. Damit ist ein flüssigkeitsdichter Verschluß jedoch nicht oder nur mit großem Aufwand unter Verwendung zusätzlicher Teile herstellbar: Trennt man den Siegelrand unmittelbar oberhalb des Halsendes ab, so entsteht nur ein ganz enger Spalt, durch den der Behälter praktisch nicht zu füllen ist. Wegen der seitlich des Flaschenhalses vorhandenen Siegelränder kann ein Verschluß auch nicht dicht auf den Flaschenhals aufgesetzt werden. Das Abschneiden der stirnseitigen Verschlußwand des Flaschenhalses gestaltet sich dabei deswegen schwierig, weil sich im Flaschenhals kein für einen Schneidvorgang erforderliches Widerlager unterbringen läßt. Eine Beschädigung des oberen Halsrandes macht jedoch das flüssigkeitsdichte Einsetzen eines Verschlußgliedes unmöglich, und außerdem bestehen im Bereich der Siegelnähte bei diametral gegenüberliegenden Stellen des Flaschenhalses sogenannte Kapillarspalte, die gegenüber einem eingesetzten Verschlußteil nicht, zumindest aber nicht ohne zusätzliche Abdichtmittel verschlossen werden können. Alle diese Maßnahmen lassen sich im Rahmen einer kontinuierlichen oder quasi-kontinuierlichen Verfahrensführung nicht durchführen.

Es ist auch bereits bekannt, bei demjenigen Stand der Technik, der auch in der DE-B-10 55 802 erwähnt ist, nämlich bei Folienbehältern, die aus zwei Hälften mittels einer umlaufenden Siegelnaht zusammengesetzt werden, an den Flaschenhals eine Kanüle mit einer Öffnungshilfe anzuformen und die Füllung des Behälters in Über-Kopf-Lage durch den Boden hindurch vorzunehmen. Zu diesem Zweck wird an jedes der beiden Bodenteile beim Tiefziehprozeß ein bis zum Rand der jeweiligen Folie reichender Einfüllkanal angeformt. Durch kongruentes und spiegelsymmetrisches Aufeinanderlegen zweier Folien werden fortlaufend Behälter gebildet, deren vom Boden ausgehender Einfüllkanal etwa zylindrisch ausgebildet und nach oben hin offen ist. Zwischen den Einfüllkanälen der Behälter werden durch einen ersten Siegelvorgang versiegelte Randbereiche hergestellt. Nach dem Füllvorgang durch den Boden hindurch werden die Einfüllkanäle durch einen zweiten Siegelvorgang verschlossen, wobei das jeweils halbzylindrisch verformte Material einer jeden Hälfte des Einfüllkanals wieder in die gestreckte Lage gebracht, d.h. auf dem Umfang gestaucht werden muß. Der hierfür erforderliche Erwärmungsprozeß ist wegen der zunächst nicht ebenen Oberflächen schwierig zu beherrschen. Unabhängig davon entsteht aber durch dieses bekannte Verfahren wegen der unter dem Flaschenboden befindlichen Siegelnaht kein Behälter mit einem als Standfläche ausgebildeten Boden, sondern ein Behälter, der bereits in der DE-A-10 55 802 als nachteilig beschrieben ist.

Der Erfindung leigt daher die Aufgabe zugrunde, ein Verfahren der eingangs beschriebenen Gattung anzugeben, durch das ein gefüllter und zuverlässig verschlossener Folien-Standbehälter herstellbar ist, für den keine zusätzlichen Verschlußteile benötigt werden.

Die Lösung der gestellten Aufgabe erfolgt bei dem eingangs angegebenen Verfahren erfindungsgemäß dadurch, daß man.
f) beim Tiefziehen an den jeweiligen Halsabschnitt ein vom Boden weggerichtetes Kanülenteil anformt, das auf den am nächsten gelegenen Folienrand ausgerichtet ist und mit einem Abstand "A" vor diesem endet, der eine spätere dichte Verbindung der am Kanülenende zunächst unverbunden aufeinanderliegenden Folienteile gewährleistet,
g) durch einen ersten Verbindungsvorgang die aufeinanderliegenden Folienteile im Randbereich mit Ausnahme einer Füllöffnung am Kanülenende miteinander vereinigt,
h) den Folienbehälter durch die Kanüle hindurch füllt,
i) die am Kanülenende im Bereich der Füllöffnung aufeinanderliegenden Folienteile durch einen zweiten Verbindungsvorgang dicht miteinander vereinigt und schließlich
j) die gefüllten und versiegelten Folienbehälter einzeln oder in Gruppen abtrennt.

Hierbei ist es wesentlich, daß das Kanülenteil sich nicht bis zu dem jeweiligen Folienrand erstreckt, sondern mit einem Abstand "A" vor diesem endet, der etwa zwischen 5 und 20 mm betragen kann. Hierdurch ist gewährleistet, daß oberhalb des Kanülenendes ebene Folienteile vorhanden sind, die nach dem Füllen durch einen zweiten Verbindungsvorgang miteinander vereinigt werden, ohne daß hierbei die Kanüle unter Stauchung des Materials zusammengequetscht werden müßte. Das Heißsiegeln flach aufeinander liegender Folienteile ist im Rahmen eines kontinuierlichen Herstellprozesses wesentlich weniger problematisch als die Rückverformung bis zum Rand hin offener Einfüllkanäle, die zudem auch noch einen größeren Durchmesser aufweisen.

Mit dem erfindungsgemäßen Verfahren sind die Füllung und ein sicherer Verschluß eines Folien-Standbehälters innerhalb einer ununterbrochenen Folge von Verfahrensschritten aus einer einzigen Folie möglich, ohne daß es hierzu besonderer und zusätzlicher Verschlußteile und Verbindungsmaßnahmen dieser Verschlußteile mit dem Standbehälter bedürfte.

Mit besonderem Vorteil lassen sich auf diese Weise sogenannte Probleportionen abpacken, die sehr häufig in großer Stückzahl und als sogenannte Massenprodukte zu Werbezwecken verteilt werden. Dabei wird besonderer Wert darauf gelegt, daß diese Miniaturpackungen der Original-Packung möglichst ähnlich sehen, um bei dem umworbenen Publikum eine Assoziation zwischen der Minipackung und den Originalprodukt zu erzeugen. Dabei wird vor allem die Forderung erfüllt, daß derartige Probe- oder Werbepackungen in möglichst großer Menge mit möglichst geringen Kosten herstellbar sein müssen.

Unter dem Ausdruck"Tiefziehen" wird jedes Verfahren zur Herstellung einer bleibenden Verformung einer ein- oder mehrschichtigen Folien verstanden, durch das in dieser Folie, ausgehend von ihrer ebenen Lage, eine Vertiefung erzeugt wird, die später mit einem fließfähigen Medium (Flüssigkeit, Paste, Pulver) gefüllt werden kann. Der Tiefziehprozeß kann dabei mit oder ohne Anwendung von Wärme erfolgen. Andere Folien, beispielsweise solche aus einem Aluminium-Laminat, können auch auf kaltem Wege mit einer entsprechenden Verformung versehen werden.

Als Folienmaterial kommen sogenannte Monofolien, mit besonderem Vorteil aber auch laminierte Folien in Frage. Die Gesamtstärke des Folienmaterials kann bei ca. 0,1 mm beginnen, wobei der größte Teil der Wandstärke zur Schaffung der mechanischen Festigkeit dient. Dieser Teil des Laminats besteht dabei vorteilhaft aus Polyvinylchlorid, Polystyrol, Aluminiumfolie, Polypropylen und Polyester. Als Dampf- und Gassperre wird dabei vorzugsweise eine Laminatschicht verwendet, die aus Aluminiumfolie, Polyvinyldichloird, Polyacyrlnitril, Polyäthylen, Polypropylen, Polyester, Polyamid besteht. Die Aufzählung der einzelnen Materialien ist jedoch nur beispielshaft und keineswegs einschränkend. Die Dampf- und Gassperre dient dabei gleichzeitig auch als Aromasperre, eine Eigenschaft, die bei Duftstoffen wichtig ist.

Der sogenannte "Halsabschnitt" braucht sich dabei im Querschnitt nicht vom Querschnitt des Hauptteils des Behälters zu unterscheiden. In diesem Falle wird der obere Teil des Folienbehälters als Halsabschnitt bezeichnet. Um jedoch die Ähnlichkeit mit "echten" Flaschen" zu fördern, wird zweckmäßig der Halsabschnitt deutlich sichtbar gegenüber dem Restvolumen des Behälters abgesetzt.

Es ist dabei mit besonderem Vorteil möglich, wenn auch beim ersten Verbindungsvorgang die aufeinanderliegenden Folienteile nur vom Boden ausgehend bis etwa zum oberen Ende des Halsabschnitts verbindet, hierbei die ebenen Folienteile über dem Halsabschnitt jedoch unverbunden läßt, nachfolgen die Folienteile im Bereich des Kanülenendes aufspreizt und den Folienbehälter durch die Spreizung hindurch füllt, die Spreizung aufhebt und schließlich die Folienteile durch den zweiten Verbindungsvorgang von oberhalb des Kanülenendes bis mindestens zum Verbindungsbereich des ersten Verbindungsvorgangs dicht miteinander verbindet.

In ganz besonders vorteilhafter Weise läßt sich das Verfahren jedoch kontinuierlich mit einer Folge von Verfahrensschritten gemäß Patentanspruch 3 durchführen. Unter einer kontinuierlichen Verfahrensführung wird auch eine solche Verfahrensführung verstanden, bei der entweder die Folie schrittweise gegenüber stillstehenden Arbeitsstationen oder die Arbeitsstationen über eine begrenzte Schrittlänge mit der mitlaufenden Folie bewegt wird bzw. werden, d.h. es kommt nur auf die Relativbewegung an. Während des relativen Stillstandes werden dann Tiefziehvorgänge, Siegelvorgänge, Füllvorgänge und Stanzvorgänge ausgeführt. Bei bestimmten Werkzeugkonstruktionen ist es aber auch möglich, Folie und Werkzeuge kontinuierlich mitlaufen zu lassen, z.B., wenn die Werkzeuge trommelförmig ausgebildet sind. Man kann ein schrittweises Verfahren aber auch als "quasi-kontinuierlich bezeichnen. Vorzugsweise werden gleichzeitig jeweils mehrere, beispielsweise vier, Folienbehälter tiefgezogen, heißgesiegelt, gefüllt und ausgestanzt. Mann nennt eine solche, gleichzeitig bearbeitet Folienlänge auch "Rapportlänge".

Von ganz besonderer Bedeutung ist bei der Verfahrensführung die Wärmebehandlung in der Heizstation. Wie anhand der Detailbeschriebung noch näher erläutert werden wird, durchlaufen die beiden Ränder der Folie beim Auffaltvorgang aus der ebenen Lage in eine Senkrechtstellung einen längeren Weg als die Folienmitte. Die beiderseits der Mittellinie "M" liegenden Folienteile. werden hierbei gewissermaßen tordiert. Dieser Vorgang erzeugt in der verhältnismäßig steifen Folie Spannungen. Durch Erwärmung der Folie auf eine materialspezifische Temperatur, die jedoch deutlich unter der Plastifizierungstemperatur beim Tiefziehen liegt, ist es möglich, die Folie derart geschmeidig zu machen, daß sie dem Auffaltvorgang willig folgt. Diese Maßnahme ist besonders wichtig für die in der Folienmitte liegende Faltlinie, da die Folie in diesem sehr engen Bereich um 180 Winkelgrade gebogen werden muß.

Es ist daher besonders zweckmäßig, wenn man die Folie in der Heizstation unter einem Heizkörper hindurchführt, der den Mittenbereich der Folie von oben beheizt, und wenn man die Folie weiterhin über ein Heizlineal hinwegführt, das die Folie im Bereich der Faltlinie von unten berührt. Heizkörper bzw. Heizlineal werden dabei zweckmäßig auf materialspezifische Temperaturen aufgeheizt, die je nach dem verwendeten Folienmaterial zwischen 80 °C und 140 °C liegen können.

Die Erfindung betrifft auch eine Vorrichtung zum Herstellen von mit fließfähigen Substanzen gefüllten, einen als Standfläche ausgebildeten Boden aufweisenden, flaschenförmigen Folienbehältern mittels eines eine Werkzeugoberfläche aufweisenden Tiefziehwerkzeugs, in dem pro Behälter mindestens ein Formhohlraum angeordnet ist und in dem ineinander übergehende Formflächen für die Erzeugung eines zur Werkzeugoberfläche senkrecht verlaufenden Bodenteils, einer Behälterwand, und eines Halsabschnitts angeordnet sind.

Zur Lösung der gleichen Aufgabe ist eine solche Vorrichtung erfindungsgemäß zum kontinuierlichen Herstellen und Füllen von tiefgezogenen Behältern ausgebildet und durch folgende Stationen gekennzeichnet:
a) eine Vorratsstation für eine Folienrolle,
b) eine Transporteinrichtung für den Transport der von der Folienrolle abgezogenen Folie in einer vorgegebenen Transportrichtung entlang eines Folienweges,
c) eine im Folienweg liegende Tiefziehstation mit dem vorstehend beschriebenen Tiefziehwerkzeug für das fortlaufende Tiefziehen von Behälterteilen aus der über die Werkzeugoberfläche transportierten und auf dieser aufliegenden Folie auf mindestens einer Seite der in Transportrichtung verlaufenden Mittellinie "M" der Folie, wobei das Tiefziehwerkzeug zusätzliche Formflächen für das gleichzeitige Tiefziehen von vom Halsabschnitt ausgehenden Kanülenteilen besitzt und die Achsen der Formflächen für die Halsabschnitte und die Kanülenteile senkrecht zur Transportrichtung verlaufen,
d) eine sich über eine Wegstrecke "L" des Folienweges in Transportrichtung erstreckende Heizstation mit mindestens einer im Mittenbereich des Folienweges liegenden Heizeinrichtung, in der die beiderseits der Mittellinie "M" liegenden Folienteile durch eine Führungseinrichtung, ausgehend von ihrer gestreckten waagrechten Lage allmählich um die Mittellinie "M" bis zur gegenseitigen Berührung in einer senkrechten Ebene hochgefaltet werden,
e) eine erste Siegelstation, in der die Folienteile in den Randbereichen des mindestens einen tiefgezogenen Behälterteils vom Bodenteil bis etwa zum oberen Ende des Halsabschnitts, jedoch nicht im darüber liegenden Bereich des Kanülenteils und nicht an den oben liegenden Rändern der Folie, miteinander zu einem Folienverbund verbindbar sind,
f) eine Füllstation auf deren Eintrittsseite der Beginn einer im Weg des Folienverbundes liegenden Spreizeinrichtung angeordnet ist, an deren beiden Seiten die oben liegenden Ränder der Folie unter Aufspreizung des oberen Kanülenendes vorbeiführbar sind, wobei die Füllstation mindestens einen Füllstutzen aufweist, der von oben zwischen die gespreizten Ränder der Folie bis in die jeweilige Kanüle einführbar und nach Beendigung des Füllvorgangs wieder zurückziehbar ist,
g) eine zweite Siegelstation, in der die Folienteile zusätzlich in den bisher nicht verbundenen Randbereichen des Folienbehälters einschließlich der Randbereiche um die Kanüle herum miteinander verbindbar sind,
h) eine erste Stanzstation für die Erzeugung einer Abdrehhilfe durch Bildung von Schwächungslinien beiderseits der Kanüle und
i) eine zweite Stanzstation für das Heraustrennen mindestens eines gefüllten Folienbehälters aus dem Folienverbund unter Anschneiden der Schwächungslinien.

Weitere vorteilhafte Ausgestaltungen von Verfahren und Vorrichtung ergeben sich aus den übrigen Unteransprüchen.

Ein Ausführungsbeispiel des Erfindungsgegenstandes wird nachfolgend anhand der Figuren 1 bis 10 näher erläutert.

Es zeigen:
- Figur 1: eine Gesamtansicht einer Vorrichtung zur kontinuierlichen Herstellung von Folienbehältern,
- Figur 2: eine perspektivische Darstellung einer Tiefziehstation mit einer daraus hervortretenden Folie met tiefgezogenen Behälterteilen,
- Figur 3: eine Draufsicht auf eine in der Tiefziehstation untergebrachtes Tiefziehwerkzeug,
- Figur 4: einen Schnitt durch das Tiefziehwerkzeug nach Figur 3 im Bereich der Längsachse zweier Behälterhälften,
- Figur 5: eine perspektivische Darstellung der Vorgänge in der Heizstation bis zum Eintritt in die erste Siegelstation,
- Figur 6: eine perspektivische Darstellung der Vorgänge in der Füllstation zwischen der ersten und der zweiten Siegelstation,
- Figur 7: eine perspektivische Darstellung des aus der zweiten Siegelstation austretenden, gefüllten Folienverbundes,
- Figur 8: eine Vorderansicht eines fertig ausgestanzten Folienbehälters,
- Figur 9: eine Seitenansicht des Folienbehälters nach Figur 8 und
- Figure 10: eine Vorderansicht von vier zusammenhängenden Folienbehältern gemäß Figur 8.

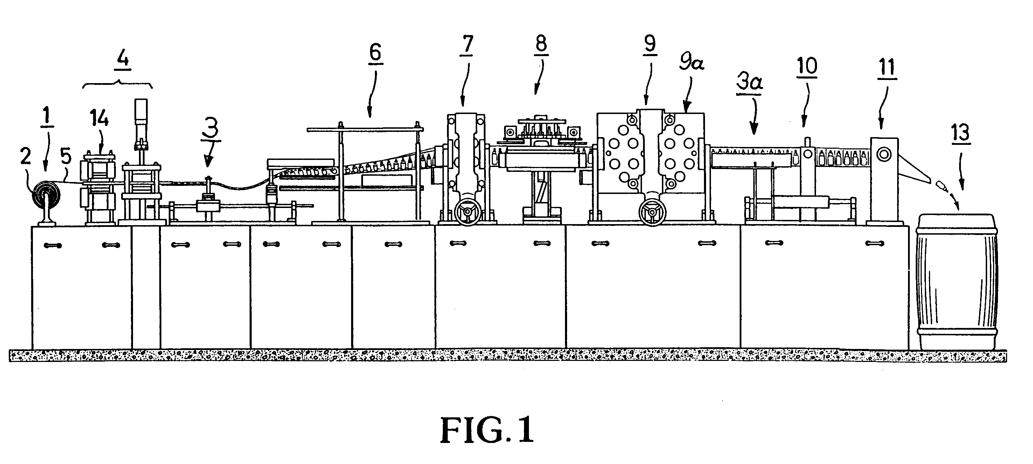

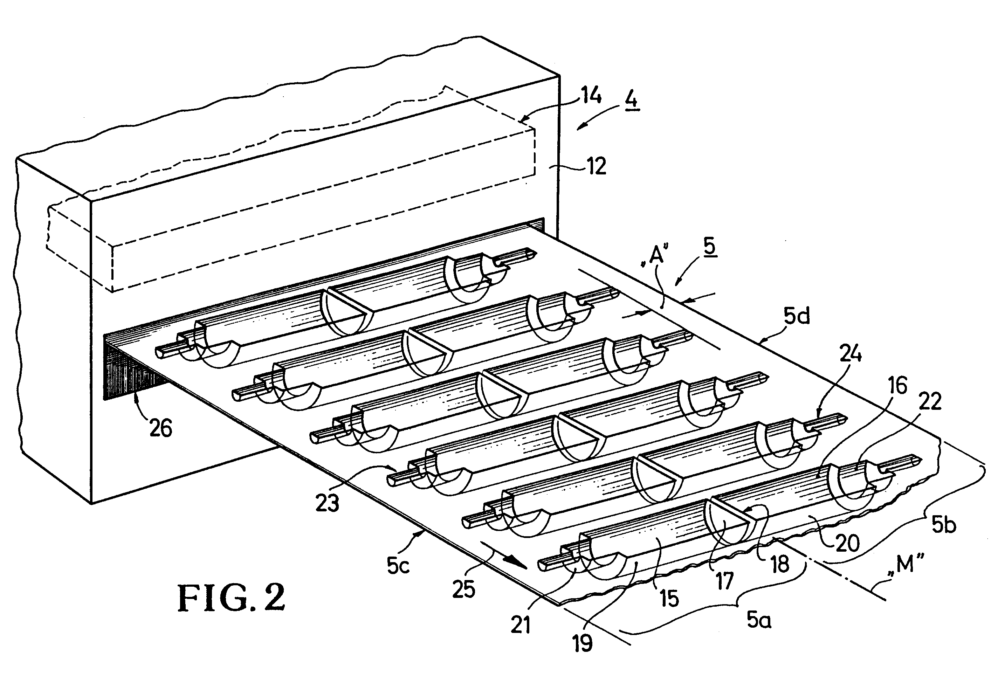

Gemäß Figur 1 besitzt die Vorrichtung eine Voratsstation 1 mit einer Folienrolle 2, zwei als "Schrittschaltwerke" mit nicht näher bezeichneten, hin- und hergehenden Greifern ausgebildeten Transporteinrichtungen 3 und 3a für den schrittweisen Transport der von der Folienrolle abgezogenen Folie 5, eine Tiefziehstation 4 mit einer vorgeschalteten Heizeinrichtung 14, eine Heizstation 6 für das Auffalten der beiderseits einer Mittellinie liegenden Folienteile, eine erste Siegelstation 7, eine Füllstation 8, eine zweite Siegelstation 9, zu der auch eine Kühlstation 9a gehört, eine erste Stanzstation 10 für das Erzeugen von Schwächungszonen (Einprägungen, Ausstanzungen in Linien- oder Spaltform) für die Bildung einer Öffnungshilfe und eine zweite Stanzstation 11 für das Abtrennen der Folienbehälter aus dem bis dahin noch zusammenhängenden Folienverbund. Die wesentlichen Stationen werden nachfolgend anhand der Figuren 2 bis 7 näher erläutert. Hinter der letzten Stanzstation befindet sich ein Auffangbehälter 13.

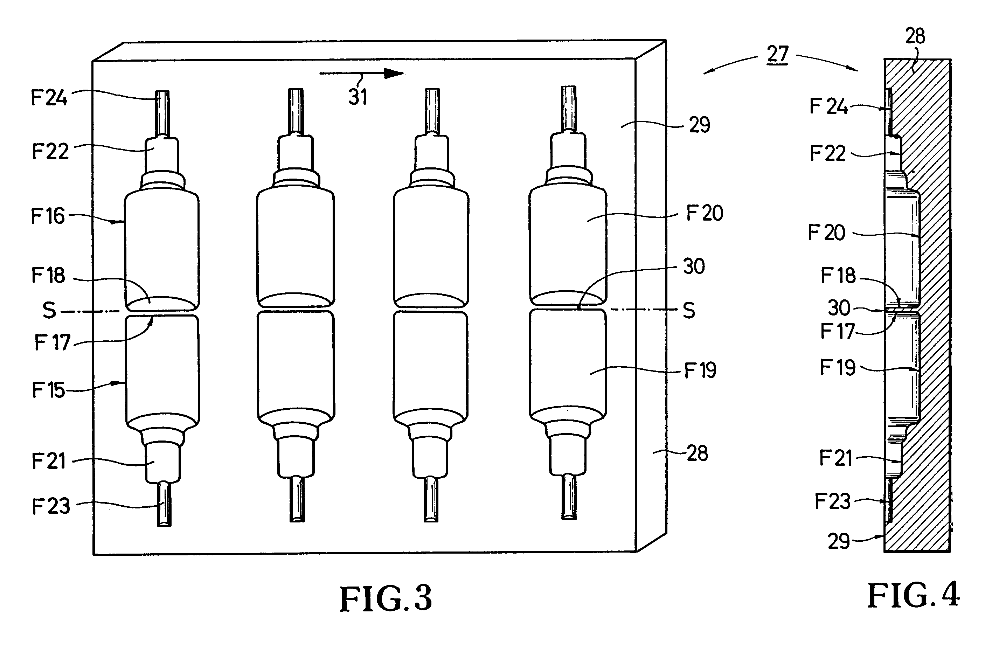

In der Tiefziehstation nach Figur 2 befindet sich in einem thermisch isolierenden Gehäuse 12 ein Tiefziehwerkzeug, das anhand der Figuren 3 und 4 noch näher erläutert werden wird. Diesem Tiefziehwerkzeug ist eine hier nur gestrichelt angedeutete Heizeinrichtung 14 für die Plastifizierung der Folie 5 zum Tiefziehen zugeordnet. Einzelheiten solcher Tiefziehprozesse an sich sind Stand der Technik, so daß hier nicht näher darauf eingegangen werden muß.

In der Folie 5 werden beiderseits einer fiktiven Mittellinie "M", die mit der späteren Faltlinie übereinstimmt, zwei gleich breite Folienteile 5a und 5b gebildet, die nach außen hin von Rändern 5c und 5d begrenzt sind, die zur Mittellinie "M" parallel verlaufen.

In der Folie 5 werden, jeweils in sogenannten "Viererblöcken" spiegelsymmetrisch zueinander liegende und paarweise zueinander gehörende Behälterteile 15 und 16 gebildet, die je aus einem Bodenteil 17 bzw. 18, einer Behälterwand 19 bzw. 20, einem Halsabschnitt 21 bzw. 22 und einem Kanülenteil 23 bzw. 24 bestehen. Die Bodenteile 17 und 18 liegen in kleinstmöglichem Abstand und parallel zueinander beiderseits der Mittellinie "M", die parallel zu der durch den Pfeil 25 gekennzeichneten Transportrichtung verläuft. Die Kanülenteile 23 und 24 erstrecken sich nicht bis zu den Rändern 5c und 5d, sondern enden in einem Abstand "A" vor diesen Rändern. Es ist ersichtlich, daß die Längsachsen der Behälterteile, insbesondere aber der Kanülenteile senkrecht zu den Folienrändern und zur Transportrichtung ausgerichtet sind und daß die jeweils zu einem Behälter gehörenden Behälterteile innerhalb der Folie den gleichen Abstand voneinander aufweisen, was durch die Gestaltung des Tiefziehwerkzeugs einerseits und die von der Transporteinrichtung vorgegebene Schrittlänge andererseits festgelegt wird. Die Folie 5 tritt durch eine Öffnung 26 im Gehäuse 12 aus.

Die Figuren 3 und 4 zeigen Einzelheiten des Tiefziehwerkzeugs 27. In einer Stahlplatte 28 sind, ausgehend von einer ebenen Werkzeugoberfläche 29, die gleichzeitig die Auflagefläche für die Folie 5 ist - pro Behälter zwei Formhohlräume F15 und F16 angeordnet, die ineinander übergehende Formflächen aufweisen. Die Formflächen F17 und F18 stehen im wesentlichen senkrecht zur Werkzeugoberfläche 29 und dienen zur Erzeugung der Bodenteile 17 und 18. Zwischen ihnen liegt ein dünnwandiger Steg 30, dessen Oberkante abgerundet ist. Die Formflächen F19 und F20 haben im wesentlichen einen zylindrischen Verlauf und dienen zur Erzeugung der Behälterwände 19 und 20. Auch die Formflächen F21 und F22 sind zylindrisch ausgebildet und dienen zur Erzeugung je eines Halsabschnitts 21 und 22. Auch die Formflächen F23 und F24 sind zylindrisch ausgebildet und dienen zur Erzeugung je eines Kanülenteils 23 und 24. Zwischen den einzelnen Formflächen liegen zur Überbrückung der Durchmesserunterschiede, weitere, hier nicht näher bezeichnete Formflächen, die - grob betrachtet - als halbe Kreisringflächen ausgebildet sind. Es ist erkennbar, daß die Achsen der Formhohlräume 15 und 16 in der Werkzeugoberfläche liegen und senkrecht zur Transportrichtung der Folie 5 verlaufen, die auch hier durch einen Pfeil 31 angedeutet ist. Die Folienbreite entspricht dabei im wesentlichen der Breite der Werkzeugoberfläche 29, quer zur Transportrichtung gesehen. Auf diese Weise ist die Einhaltung des Abstandes "A" (Figur 2) sichergestellt. Die Mittellinie "M" der Folie fällt bei der Auflage auf der Werkzeugoberfläche 29 mit dessen Symmetrieachse S-S zusammen.

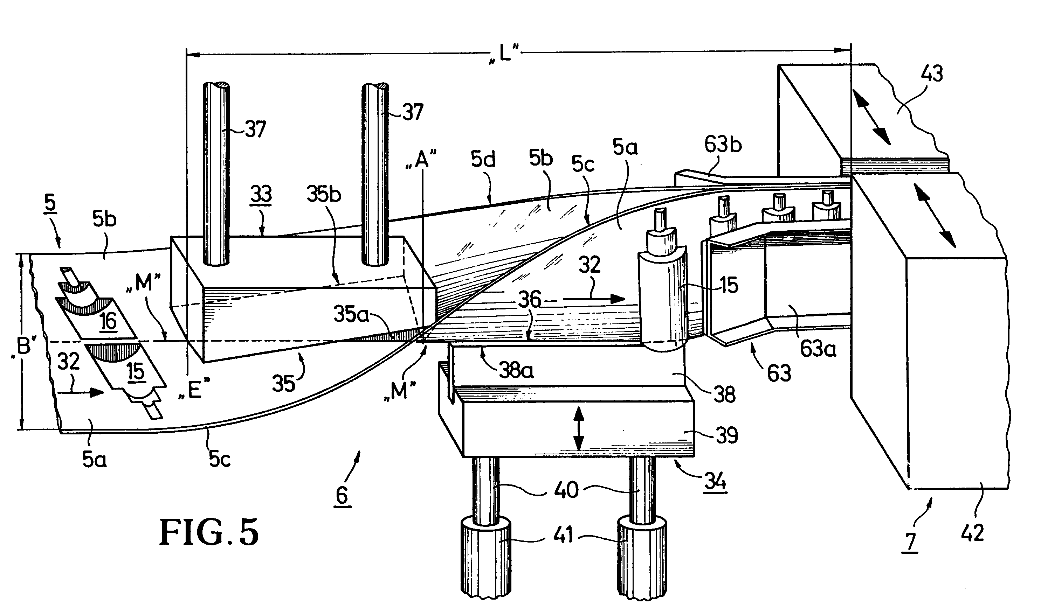

Figure 5 zeigt Einzelheiten der Heizstation 6, wobei allerdings die Wegstrecke "L" des Folienweges in Transportrichtung etwas verkürzt dargestellt ist, um die Übersichtlichkeit zu erleichtern. Die Transportrichtung der Folie 5 ist durch Pfeile 32 angedeutet. Man muß sich die Folienabschnitte in den Figuren 2 und 5 unmittelbar miteinander verbunden denken. Im Mittenbereich des Folienweges liegen zwei Heizeinrichtungen 33 und 34, durch die die beiderseits der Mittellinie "M" liegenden Folienteile 5a und 5b erwärmt werde, so daß sie, ausgehend von ihrer gestreckten waagrechten Lage (Figur 5 links) allmählich um die Mittellinie "M" bis zur gegenseitigen Berührung in einer senkrechten Ebene hochgefaltet werden können (Figur 5 rechts). Von den tiefgezogenen Behälterteilen 15 und 16 ist der Übersichtlichkeit halber nur ein Teil gezeigt.

Es ist erkennbar, daß hierbei die Ränder 5c und 5d einen größeren Weg zurücklegen müssen, als die Mittellinie "M". Dies ist auf die - auch zeichnerisch dargestellte - Tordierung der Folienteile 5a und 5b zurückzuführen. Um hierbei die Sperrigkeit der Folie aufzuheben, sind die genannten Heizeinrichtung 33 und 34 vorgesehen.

Die auf dem Folienweg erste Heizeinrichtung 33 ist als ein über der Folie 5 angeordneter Heizkörper ausgebildet, dessen der Folie zugekehrte Unterseite 35 von spiegelsymmetrisch und V-förmig zueinander ausgerichteten Flächen 35a und 35b begrenzt ist. Es ist erkennbar, daß der Öffnungswinkel des "V" von der Eintrittseite "E" zur Austrittsseite "A" nach Maßgabe des abnehmenden Verlaufs des Faltwinkels zwischen den Folienteilen kontinuierlich abnimmt, und daß die Scheitellinie der Flächen 35a und 35b unmittelbar über der Faltlinie der Folienteile verläuft, wobei die Unterseite des Heizkörpers an allen Stellen einen kleinstmöglichen Abstand von der vorbeiwandernden Folie hat. Es ergibt sich aus Figur 5, daß der sogenannte Faltwinkel am linken Bildrand 180 Grad beträgt, am rechten Bildrand jedoch 0 Grad.

Die Heizeinrichtung 33 besteht aus einem gemäß den vorstehenden Konstruktionsvorschriften geformten Leichtmetallblock, in dem ein nicht näher dargestellter Heizwiderstand untergebracht ist. Dessen Anschlußleitungen sind in den beiden Tragstützen 37 verlegt, mit deren Hilfe eine Vertikaljustierung der Heizeinrichtung 33 möglich ist.

Der Heizeinrichtung 33 folgt eine zweite Heizeinrichtung 34, die als ein unter der Faltlinie 36 bzw. Mittellinie "M" angeordnetes und zur Faltlinie parallel verlaufendes Heizlineal ausgebildet ist. Dieses Heizlineal besitzt eine Wärmeübertragungsplatte 38, die in einen Heizkörper 39 eingespannt ist, in dem sich gleichfalls ein nicht dargestellter Heizwiderstand befindet. Beim Betrieb berührt die lineare Oberkante 38a der Wärmeübertragungsplatte 38 die Unterseite der Faltlinie 36. Beim Stillstand der Vorrichtung kann die Heizeinrichtung 34 mittels ihrer Tragstützen 40, die mit Druckmittelantrieben 41 verbunden sind, abgesenkt werden, um die Folie nicht zu überhitzen. In der Regel hat das heizlineal eine höhere Oberflächentemperatur als die Heizeinrichtung 33, allerdings kann auch die Heizeinrichtung 33 in analoger Weise anhebbar gelagert werden.

Die Heizeinrichtungen 33 und 34 sind in Transportrichtung der Folie verkürzt dargestellt. Es versteht sich jedoch, daß die Heizeinrichtungen in Transportrichtung der Folie eine Länge aufweisen, die mindestens der Gesamtlänge der gleichzeitig tiefgezogenen Behälterteile 15 und 16 entspricht. Bei der gleichzeitigen Erzeugung von insgesamt vier Behälterteilpaaren müssen die Heizeinrichtungen mithin eine Länge haben, die mindestens dem Achsabstand von einem ersten bis zum jeweils vierten Formhohlraum-Paar entspricht, der sogenannten "Rapportlänge".

Am Ende der Heizstation befindet sich eine Führungseinrichtung 63 mit zwei spiegelsymmetrisch zum nunmehr senkrecht Folienweg nach vorn außen abgewinkelten Führungswänden 63a und 63b, zwischen denen der Auffaltvorgant vollendet wird.

Nach dem vollständigen Auffaltvorgang werden die mit Ausnahme der Behälterteile plan aufeinanderliegenden Folienteile 5a und 5b der ersten Siegelstation 7 zugeführt, die aus zwei quer zu den Behälterachsen beweglichen Siegelbacken 42 und 43 besteht.

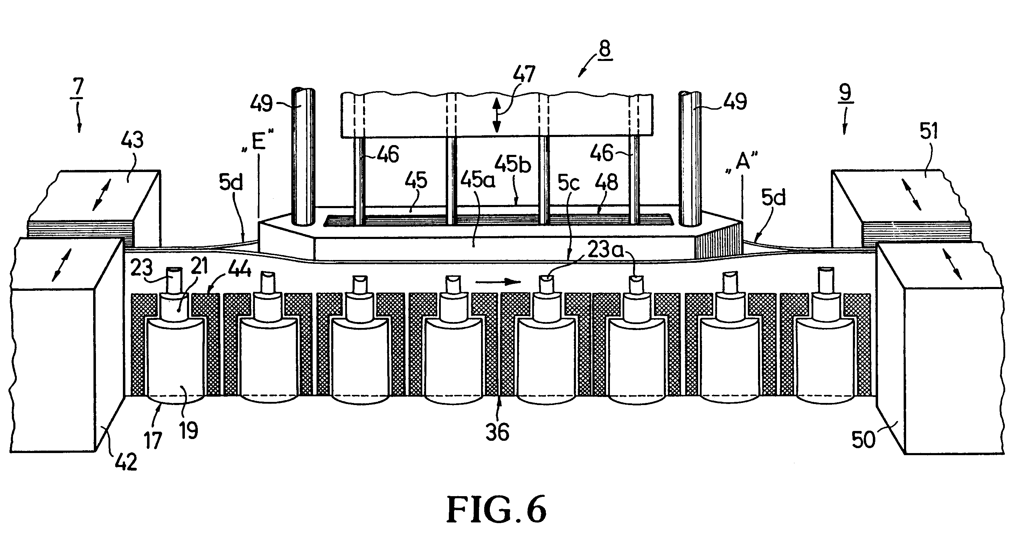

Die Auswirkungen der ersten Siegelstation 7 sind in Figur 6 rechts von dieser Siegelstation gezeigt: Die Folienteile 5a und 5b sind in den Randbereichen der spiegelsymmetrisch aufeinanderliegenden tiefgezogenen Behälterteile 15 und 16 vom Boden 17 bzw. 18 bis zum oberen ende des Halsabschnitts 21 bzw. 22 miteinander versiegelt, was durch die diagonal kreuzschraffierten Bereiche symbolisiert ist. Die Versiegelung erstreckt sich jedoch nicht auf den darüberliegenden Bereich der Kanülenteile 23 bzw. 24 und nicht auf die oben liegenden Ränder der Folie; vielmehr endet die Siegelzone an einer oben liegenden Grenzlinie 44, die an der Übergangsstelle zwischen dem jeweiligen Halsabschnitt 21 und dem Kanülenteil 23 liegt. Daraus ergibt sich die Form der beheizten Teile der Siegelbacken 42 und 43.

Der ersten Siegelstation 7 folgt die Füllstation 8, auf deren Eintrittsseite "E" der Beginn einer im Weg des nunmehr bestehenden Folienverbundes liegenden Spreizeinrichtung 45 angeordnet ist, an deren beiden Seiten 45a und 45b die beiden oben liegenden Ränder 5c und 5d der Folie 5 unter Aufspreizung der oberen Kanülenenden 23a vorbeigeführt werden. Die Spreizeinrichtung 45 ist zur Eintrittsseite "E" und zur Austrittseite "A" hin keilförmig ausgebildet, und sie hat im wesentlichen die Form eines Schiffsrumpfes, d.h., die beiden Seiten 45a und 45b verlaufen V-förmig zueinander. Die Füllstation 8 besitzt insgesamt vier röhrchenförmige Füllstutzen 46, deren Abstand dem Abstand der Kanülen im Folienverbund entspricht. Diese Füllstützen sind über nicht gezeigte Leitungen und eine Dosiervorrichtung mit einem gleichfalls nicht gezeigten Vorratsbehälter verbunden. Durch eine Taktsteuerung wird dafür Sorge getragen, daß die Füllstutzen 46 dann in die Kanülen eingeführt werden können, wenn der Folienverbund zum Stillstand gekommen ist. Während dieser Zeit werden in der Tiefziehstation 4 vier Paare von Behälterteilen 15 und 16 tiefgezogen, in der ersten Siegelstation mit entsprechenden ersten Siegelzonen versehen und in der nachfolgenden zweiten Siegelstation 9 endgültig versiegelt, worauf weiter unten noch eingegangen wird.

Um die Bewegung der Füllstutzen 46 im Sinne des Doppelpfeils 47 zu ermöglichen, ist in der Spreizeinrichtung 45 entlang ihrer in Transportrichtung des Folienverbundes verlaufenden Längsachse eine von oben nach unten durchgehende Ausnehmung 48 angeordnet, durch die die Füllstutzen 46 hindurchführbar sind. Zur Höheneinstellung der Spreizeinrichtung 45 dienen zwei Tragstützen 49. Nach dem Füllen bewegen sich die Folienränder 5c und 5d aufgrund der Eigenelastizität der Folie 5 wieder aufeinender zu und treten zwischen die Siegelbacken 50 und 51 der zweiten Siegelstation 9 ein, die in analoger Weise wie die Siegelbacken 42 und 43 der ersten Siegelstation 7 quer zur Folie im Sinne der beiden Doppelpfeile beweglich gelagert sind.

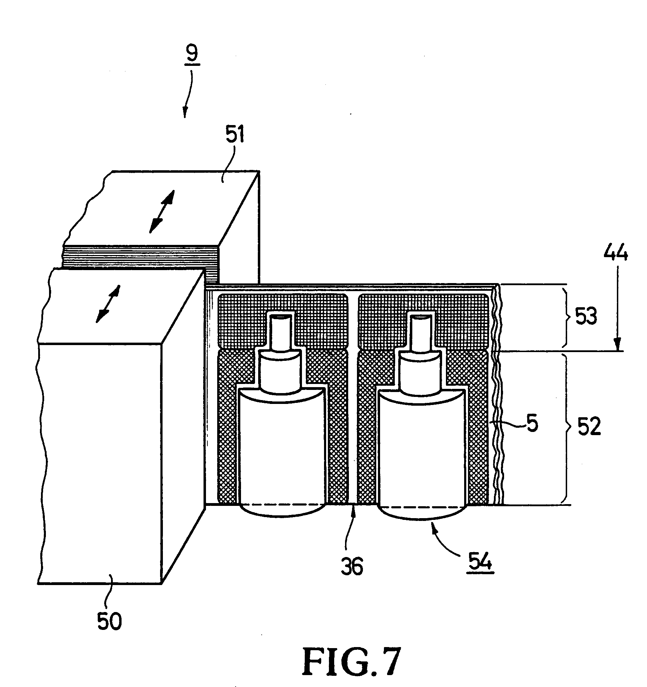

Die Einwirkung der Siegelbacken 50 und 51 ist Figur 7 zu entnehmen: Die Folienteile 5a und 5b sind in den bisher nicht verbundenen Randbereichen des Folienbehälters einschließlich der Randbereiche um die Kanüle 23, 24 herum miteinander versiegelt, und zwar bis zu der bereits beschriebenen Grenzlinien 44 (Figur 6), was in Figur 7 durch die randparallel kreuzschraffierten Bereiche dargestellt ist. Der Folienbehälter ist nun allseitig dicht verschlossen, ohne daß es zu diesem Zweck eines Zusammenquetschens der Kanülenteile 23 und 24 bedurfte, wie der Figur 7 unschwer zu entnehmen ist. Aus der Form der randparallel kreuzschraffierten Siegelzonen in Figur 7 ergibt sich auch die Ausbildung der beheizten Zonen der Siegelbacken 50 und 51. Die Siegelzonen 52 und 53 sind in Figur 7 als getrennte bzw. sich geringfügig überlappende Zonen dargestellt. Mit besonderem Vorteil sind jedoch die wirksamen Siegelflächen der zweiten Siegelstation 9 so ausgebildet, daß die von ihnen am Folienverbund erzeugten Siegelzonen die von der ersten Siegelstation erzeugten Siegelzonen vollständig überdecken, so daß am fertigen Behälter überhaupt nicht mehr feststellbar ist, daß die Siegelung in zwei voneinander getrennten Arbeitgängen erfolgt ist. Die Sicherheit wird so erhöht.

Von besonderer Bedeutung ist wiederum auch die Kühlung der gesammten Siegelzonen in der Kühlstation 9a. Zu diesem Zweck ist die Kühlstation 9a mit Kühlbacken ausgerüstet, deren auf die Folie einwirkenden Kühlflächen hinsichtlich ihrer Lage relative zum Folienverbund und der Form und Größe so gestaltet sind, daß die Gesamtfläche aller gleichzeitig gekühlter Siegelzonen rasch und wirksam abgekühlt wird. Die Siegelflächen der Siegelwerkzeuge und die Kühlfächen der Kühlbacken sind also im wesentlichen - wenn man sie aufeinander projizieren würde - kongruent. Dadurch wird dem Folienverbund mit den mittlerweile gefüllten Behältern rasch die durch den Siegelvorgang eingebrachte Wärme wieder entzogen und die Steifigkeit des Folienmaterials wieder hergestellt, was für die weitere Handhabung des "Stranges" besonders vorteilhaft ist..

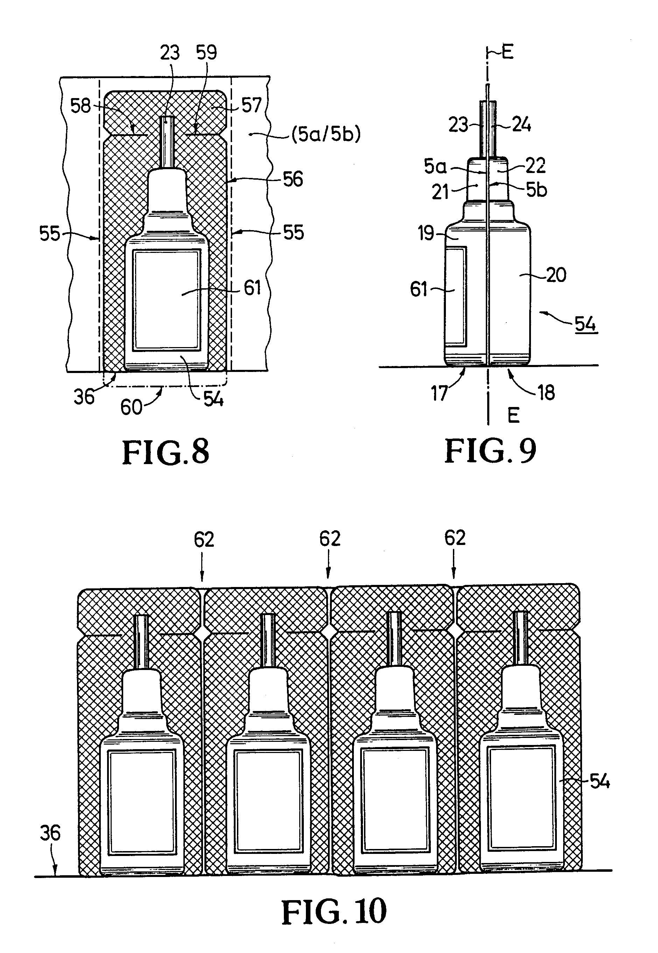

In Figur 8 ist eine Ausschnitt aus der aus den Folienteilen 5a und 5b bestehenden Verbundfolie dargestellt, der von den jeweils benachbarten Folienbehältern 54 durch zwei gestrichelte Linien 55 abgegrenzt ist. Zunächst wird in der ersten Stanzstation 10 eine Abdrehhilfe 57 dadurch erzeugt, daß man beiderseits der Kanüle 23 Schwächungslinien 58 und 59 erzeugt, die auf die Kanüle ausgerichtet sind, miteinander fluchten, die Kanüle jedoch nicht erreichen.

Nachfolgend wird in der zweiten Stanzstation 11 der Folienbehälter 54 aus dem Folienverbund 5a/5b unter Anschneiden der Schwächungslinien 58 und 59 herausgetrennt, und zwar entlang eines um den Folienbehälter 54 herum geführten Linienzuges 56, der im Bereich der Schwächungslinien 58 und 59 zwei Einkerbungen besitzt. Durch die strichpunktierte Linie 60 unterhalb der Faltlinie 36 ist angedeutet, welchen Verlauf die Flanschränder in den Randbereichen des Folienbehälters 54 nehmen würden, wenn dieser aus zwei getrennten Folien gebildet und beispielsweise durch den Boden hindurch gefüllt würde.

Die Folienbehälter 54 können während ihres Herstellprozesses zusätzlich auch noch mit einem Etikett 61 versehen werden.

Anhand von Figur 10 wird gezeigt, daß mehrere derartige Folienbehälter 54 auch als Behälterpaket miteinander vereinigt bleiben können. Zwischen den miteinander verbundenen Randbereichen (kreuzschraffierte Flächen) befinden sich weitere Schwächungslinien 62, entlang welcher die Einzelbehälter ohne Zuhilfenahme von Werkzeugen abgetrennt, beispielsweise abgebrochen, werden können. Es ist ersichtlich, daß die Bodenteile 17 und 18 in einer gemeinsamen Ebene liegen, in der auch die Faltlinie 36 liegt. Es ist jedoch nicht erforderlich, daß sämtliche Einzelbehälter die gleiche Form, Größe oder den gleichen Inhalt haben. Vielmehr ist es auch möglich, hier unterschiedliche Packungsgrößen miteinander zu vereinigen und in den Einzelbehältern auch unterschiedliche Füllungen vorzusehen, was durch entsprechende Etikettierung kenntlich gemacht werden kann.

Wie insbesondere aus Figur 9 hervorgeht, ist der Folienbehälter 54 in Bezug auf seine Teilungsebene E-E spiegelsymmetrisch ausgebildet. Die erfindungsgemäßen Folienbehälter können in Bezug auf die durch ihre Randbereiche definierte Teilungsebene E-E sowohl asymmetrisch als auch symmetrisch ausgebildet sein. Eine asymmetrische Ausführungsform besteht beispielhaft aus einem tiefgezogenen Behälterteil und einem ebenen Behälterteil, das dann lediglich als Verschlußteil dient. Es sind natürlich Zwischenformen denkbar, bei denen die beiden Behälterteile unterschiedlich tief gezogen sind oder auch unterschiedliche geometrische Formen besitzen.

Außerdem ist es möglich, die Behälterteile in der Teilungsebene versetzt zueinander auszubilden, um auf diese Weise einen Behälter mit einer besonders auffallenden Form zu erzeugen.

Schließlich ist es auch denkbar, eines der Behälterteile nicht konkav, sondern konvex auszubilden, so daß zwischen den beiden Behälterteilen ein Raum mit sichelförmigem Querschnitt gebildet wird, in dem eine besonders geringe Menge des Verpackungsguts bei großflächiger Verteilung untergebracht werden kann. Für eine Probe- oder Werbepakkung ist eine solche Maßnahme vollständig ausreichend.

Aus Gründen der Übersichtlichkeit wurden Vertikalführungen für die Folie bzw. den Folienverbund, d.h. sogenannte Tragplatten, und Horizontalführungen, d.h. sogenanne Seitenwände, mit Ausnahme der Führungseinrichtung 63 nicht näher dargestellt. Es versteht sich jedoch, daß solche Führungseinrichtungen überall vorgesehen sind, wo die Folie bzw. der Folienverbund einer Führung oder Stützung bedarf, so z.B. auch im Bereich der Füllstation 8 beiderseits und unterhalb der Spreizeinrichtung 45.

## Patentansprüche

1. Verfahren zum Herstellen von mit fließfähigen Substanzen gefüllten, einen als Standfläche ausgebildeten Boden aufweisenden flaschenförmigen Folienbehältern (54) durch
a) Tiefziehen mindestens eines Behälterteils (15, 16) pro Folienbehälter (54) aus ebenem, verformbarem Folienmaterial (5) mit einem zur Folienebene im wesentlichen senkrecht ausgerichteten Bodenteil (17, 18), mit einem dem Bodenteil abgekehrten Halsabschnitt (21, 22) und mit außerhalb des Bodens am Umfang des Behälterteils (15, 16) überstehenden Randbereichen ,
b) Herumklappen des Folienmaterials um eine im wesentlichen an der kantenförmigen Übergangsstelle von Bodenteil (17, 18) und Folienebene liegende Faltlinie (36),
c) Verbinden der beiderseits der Faltlinie (36) liegenden nach dem Herumklappen in den Randbereichen aufeinander liegenden Folienteile (5a, 5b) vom Boden ausgehend bis mindestens etwa zum oberen Ende des Halsabschnitts (21, 22) durch einen ersten Verbindungsvorgang,
d) Füllen des Folienbehälters (54) durch den Halsabschnitt (21, 22) und
e) Verschließen des Folienbehälters (54),
dadurch gekennzeichnet, daß man
f) beim Tiefziehen an den jeweiligen Halsabschnitt (21, 22) ein vom Boden weggerichtetes Kanülenteil (23, 24) anformt, das auf den am nächsten gelegenen Folienrand (5c, 5d) ausgerichtet ist und mit einem Abstand "A" vor diesem endet, der eine spätere dichte Verbindung der am Kanülenende zunächst unverbunden aufeinanderliegenden Folienteile (5a, 5b) gewährleistet,
g) durch einen ersten Verbindungvorgang die aufeinanderliegenden Folienteile (5a, 5b) im Randbereich mit Ausnahme einer Füllöffnung am Kanülenende miteinander vereinigt,
h) den Folienbehälter (54) durch die Kanüle hindurch füllt,
i) die am Kanülenende im Bereich der Füllöffnung aufeinanderliegenden Folienteile (5a, 5b) durch einen zweiten Verbindungsvorgang dicht miteinander vereinigt und schließlich
j) die gefüllten und versiegelten Folienbehälter (54) einzeln oder in Gruppen abtrennt.

2. Verfahren nach Anspruch 1, dadurch gekennzeichnet, daß man beim ersten Verbindungsvorgang die aufeinanderliegenden Folienteile (5a, 5b) nur vom Boden ausgehend bis etwa zum oberen Ende des Halsabschnitts (21, 22) verbindet, hierbei die ebenen Folienteile (5a, 5b) über dem Halsabschnitt (21, 22) jedoch unverbunden läßt, nachfolgend die Folienteile (5a, 5b) im Bereich des Kanülenendes spreizt und den Folienbehälter (54) durch die Spreizung hindurch füllt, die Spreizung aufhebt und schließlich die Folienteile (5a, 5b) durch den zweiten Verbindungvorgang von oberhalb des Kanülenendes bis mindestens zum Verbindungsbereich des ersten Verbindungsvorgangs dicht miteinander verbindet.

3. Verfahren nach Anspruch 2, dadurch gekennzeichnet, daß man
a) in einer bewegten Folie (5) auf mindestens einer Seite einer in Transportrichtung verlaufenden Mittellinie ("M") der Folie (5) in einer Tiefziehstation (4) fortlaufend Behälterteile (17, 18) tiefzieht, deren Achsen während des Tiefziehvorgangs waagrecht ausgerichtet sind und senkrecht auf der Mittellinie ("M") stehen,
b) nachfolgend innerhalb einer Wegstrecke "L" die Folie (5) in einer Heizstation (6) mindestens in ihrem Mittenbereich auf eine materialspezifische Temperatur "T₁" erwärmt, die eine Verformung unterhalb der Plastifizierung ermöglicht, und die beiderseits der Mittellinie ("M") liegenden Folienteile (5a, 5b) fortlaufend bis zur gegenseitigen Berührung der Folienteile (5a, 5b) in einer senkrechten Ebene aufeinanderfaltet,
c) die Folienteile (5a, 5b) in den Randbereichen des mindestens einen tiefgezogenen Behälterteils (15, 16) in einer ersten Siegelstation (7) vom Boden bis etwa zum oberen Ende des Halsabschnitts (21, 22), jedoch nicht im oberen Bereich der Kanüle miteinander verbindet,
d) den aus der ersten Siegelstation (7) kommenden Folienverbund oberhalb der in der Siegelstation (7) erzeugten Verbindung bis zu den Folienrändern einschließlich des Kanülenendes aufspreizt und den Folienverbund in aufgespreiztem Zustand durch eine Füllstation (8) hindurchführt, in der die Folienbehälter (54) durch die Kanüle hindurch gefüllt werden,
e) den Folienverbund von der Füllstation (8) unter Aufhebung der Spreizung einer zweiten Siegelstation (9) zuführt, in der die bisher nicht verbundenen Randbereiche um die Kanüle herum miteinander verbunden werden,
f) beiderseits der Kanüle im verbundenen Randbereich Schwächungszonen (58,59) für ein Abdrehen des oberen Kanülenende erzeugt und schließlich
g) die gefüllten und versiegelten Folienbehälter (54) einzeln oder in Gruppen ausstanzt.

4. Verfahren nach Anspruch 3, dadurch gekennzeichnet, daß man die Folie (5) in der Heizstation (6) unter einer Heizeinrichtung (33) hindurchführt, die den Mittenbereich ("M") der Folie (5) von oben beheizt.

5. Verfahren nach Anspruch 3, dadurch gekennzeichnet, daß man die Folie (5) in der Heizstation (6) über eine Heizeinrichtung (34) hinwegführt, die die Folie (5) im Bereich der Faltline (36) berührt.

6. Verfahren nach Anspruch 1, dadurch gekennzeichnet,, daß man den Folienverbund nach dem Austritt aus der zweiten Siegelstation (9) durch eine Kühlstation (9a) führt, in der die in der zweiten Siegelstation (9) erzeugten Siegelzonen (53) durch das Anpressen von den Siegelzonen entsprechenden Kühlbacken gekühlt werden.

7. Vorrichtung zum Herstellen von mit fließfähigen Substanzen gefüllten, einen als Standfläche ausgebildeten Boden aufweisenden, flaschenförmigen Folienbehältern (54) mittels eines eine Werkzeugoberfläche (29) aufweisenden Tiefziehwerkzeugs (27), in dem pro Behälter mindestens ein Formhohlraum (F15, F16) angeordnet ist und in dem ineinander übergehende Formflächen (F17, F18, F19, F20, F21, F22) für die Erzeugung eines zur Werkzeugoberfläche (29) senkrecht verlaufenden Bodenteils (17, 18), einer Behälterwand (19, 20), und eines Halsabschnitts (21, 22) angeordnet sind, dadurch gekennzeichnet, daß die Vorrichtung zum kontinuierlichen Herstellen und Füllen von tiefgezogenen Behältern folgende Stationen besitzt:
a) eine Vorratsstation (1) für eine Folienrolle (2),
b) eine Transporteinrichtung (3, 3a) für den Transport der von der Folienrolle abgezogenen Folie (5) in einer vorgegebenen Transportrichtung entlang eines Folienweges,
c) eine im Folienweg liegende Tiefziehstation (4) mit dem vorstehend beschriebenen Tiefziehwerkzeug (27) für das fortlaufende Tiefziehen von Behälterteilen (15, 16) aus der über die Werkzeugoberfläche (29) transportierten und auf dieser aufliegenden Folie (5) auf mindestens einer Seite der in Transportrichtung verlaufenden Mittellinie "M" der Folie, wobei das Tiefziehwerkzeug (27) zusätzliche Formflächen (F23, F24) für das gleichzeitige Tiefziehen von vom Halsabschnitt (21, 22) ausgehenden Kanülenteilen (23, 24) besitzt und die Achsen der Formflächen (F21, F22, F23 und F24) für die Halsabschnitte (21, 22) und die Kanülenteile (23, 24) senkrecht zur Transportrichtung (Pfeil 31) verlaufen,
d) eine sich über eine Wegstrecke "L" des Folienweges in Transportrichtung erstreckende Heizstation (6) mit mindestens einer im Mittenbereich des Folienweges liegenden Heizeinrichtung (33, 34), in der die beiderseits der Mittellinie "M" liegenden Folienteile (5a, 5b) durch eine Führungseinrichtung, ausgehend von ihrer gestreckten waagrechten Lage allmählich um die Mittellinie "M" bis zur gegenseitigen Berührung in einer senkrechten Ebene hochgefaltet werden,
e) eine erste Siegelstation (7), in der die Folienteile (5a, 5b) in den Randbereichen des mindestens einen tiefgezogenen Behälterteils (15, 16) vom Bodenteil (17, 18) bis etwa zum oberen Ende des Halsabschnitts, (21, 22) jedoch nicht im darüber liegenden Bereich des Kanülenteils (23, 24) und nicht an den oben liegenden Rändern (5c, 5d) der Folie, miteinander zu einem Folienverbund verbindbar sind,
f) eine Füllstation (8) auf deren Eintrittsseite (E) der Beginn einer im Weg des Folienverbundes liegenden Spreizeinrichtung (45) angeordnet ist, an deren beiden Seiten (45a, 45b) die oben liegenden Ränder (5c, 5d) der Folie (5) unter Aufspreizung des oberen Kanülenendes (23a) vorbeiführbar sind, wobei die Füllstation (8) mindestens einen Füllstutzen (46) aufweist, der von oben zwischen die gespreizten Ränder (5c, 5d) der Folie (5)bis in die jeweilige Kanüle (23, 24) einführbar und nach Beendigung des Füllvorgangs wieder zurückziehbar ist,
g) eine zweite Siegelstation (9), in der die Folienteile (5a, 5b) zusätzlich in den bisher nicht verbundenen Randbereichen des Folienbehälters einschließlich der Randbereiche um die Kanüle (23, 24) herum miteinander verbindbar sind,
h) eine erste Stanzstation (10) für die Erzeugung einer Abdrehhilfe (57) durch Bildung von Schwächungslinien (58, 59) beiderseits der Kanüle (23, 24), und
i) eine zweite Stanzstation (11) für das Heraustrennen mindestens eines gefüllten Folienbehälters (54) aus dem Folienverbund unter Anschneiden der Schwächungslinien (58, 59).

8. Vorrichtung nach Anspruch 7, dadurch gekennzeichnet, daß die Wegstrecke "L" in der Heizstation mindestens so lang ist wie die "Rapportlänge" (= Folienlänge über die Gesamtheit der gleichzeitig tiefgezogenen Behälterteile).

9. Vorrichtung nach Anspruch 7, dadurch gekennzeichnet, daß die Heizstation (6) eine erste Heizeinrichtung (33) aufweist, die als über dem Folienweg angeordneter Heizkörper ausgebildet ist, dessen der Folie zugekehrte Unterseite (35) von spiegelsymmetrisch und V-förmig zueinander ausgerichteten Flächen (35a, 35b) begrenzt ist, wobei der Öffnungswinkel des "V" von der Eintrittsseite (E) zur Austritsseite (A) hin nach Maßgabe des abnehmenden Verlaufs des Faltwinkels zwischen den Folienteilen kontinuierlich abnimmt und die Scheitellinie der Flächen (35a, 35b) unmittelbar über der Faltlinie der Folienteile verläuft, derart, daß die Unterseite des Heizkörpers an allen Stellen einen kleinstmöglichen Abstand von der vorbeiwandernden Folie hat.

10. Vorrichtung nach Anspruch 7, dadurch gekennzeichnet, daß die Heizstation (6) eine zweite Heizeinrichtung (34) aufweist, die als unter der Faltlinie (36) bzw. Mittellinie "M" der Folie (5) angeordnetes und zur Faltlinie parallel verlaufendes Heizlineal ausgebildet ist.

11. Vorrichtung nach Anspruch 10, dadurch gekennzeichnet, daß das Heizlineal absenkbar gelagert ist.

12. Vorrichtung nach Anspruch 7, dadurch gekennzeichnet, daß die erste Siegelstation (7) beheizbare Siegelbacken (42, 43) mit Siegelflächen aufweist, die auf den Bereich oberhalb des Bodenteils (17, 18) sowie beiderseits der Behälterwand (19, 20) und mindestens eines Teils des Halsabschnitts (21, 22) des Folienbehälters (54) begrenzt sind.

13. Vorrichtung nach Anspruch 7, dadurch gekennzeichnet, daß die Spreizeinrichtung (45) zur Eintrittsseite (E) und zur Austrittsseite (A) hin keilförmig ausgebildet ist.

14. Vorrichtung nach Anspruch 13, dadurch gekennzeichnet, daß die Spreizeinrichtung (45) die Form eines Schiffsrumpfes hat.

15. Vorrichtung nach Anspruch 14, dadurch gekennzeichnet, daß die Spreizeinrichtung (45) entlang ihrer in Transportrichtung des Folienverbundes verlaufenden Längsachse eine von oben nach unten durchgehenden Ausnehmung (48) aufweist, durch die der mindestens eine Füllstutzen (46) der Füllstation (8) hindurchführbar ist.

16. Vorrichtung nach Anspruch 7, dadurch gekennzeichnet, daß die zweite Siegelstation (9) beheizbare Siegelbacken (50, 51) mit Siegelflächen aufweist, die mindestens den Bereich beiderseits und oberhalb der Kanüle (23, 24) umfassen.

17. Vorrichtung nach Anspruch 16, dadurch gekennzeichnet, daß die Siegelflächen der zweiten Siegelstation (9) so dimensioniert sind, daß sie auch den gesamten Bereich der Siegelzonen der ersten Siegelstation (7) überdecken bzw. erfassen.

18. Vorrichtung nach Anspruch 7, dadurch gekennzeichnet, daß sich an die zweite Siegelstation (9) eine Kühlstation (9a) mit Kühlbacken anschließt, deren Kühlflächen hinsichtlich ihrer Lage relativ zum Folienverbund und ihrer Form und Größe im wesentlichen der Lage, Form und Größe der in der zweiten Siegelstation (9) erzeugten Siegelzonen entsprechen.

## Claims

1. Process of manufacturing bottleshaped containers made of a sheet-material (54), which are filled with pourable substances and comprise a bottom arranged as a standing-up surface, by
a) deep-drawing at least one container part (15, 16) per container of sheet-material (54) from flat, deformable sheet material (5), comprising a bottom part (17, 18) which is oriented substantially perpendicularly to the sheet-material plane, a neck section (21, 22) which faces away from the bottom part, and with edge regions which protrude outside the bottom over the periphery of the container part (15, 16);
b) folding the sheet material around a folding line (36) which is substantially located at the edgeshaped transitional location of bottom part (17, 18) and plane of the sheet material;
c) joining the sheet-material sections (5a, 5b), which are located on both sides of the folding line (36) and which lie on top of each other after folding around in the edge regions, commencing from the bottom up to at least virtually to the top end of the neck section (21, 22) by way of a first joining process;
d) filling the container of sheet-material (54) through the neck section (21, 22); and
e) sealing the container of sheet-material (54),
**characterized in that**
f) whilst deep-drawing, a cannula element (23, 24), which is facing away from the bottom, is formed onto a respective neck section (21, 22) and oriented towards the nearest sheet-material edge (5c, 5d) and ends at a distance "A" therefrom, which later ensures a tight seal of the sheet-material sections (5a, 5b) which initially lie unconnectedly on top of one another;
g) the sheet-material sections (5a, 5b) which lie on top of one another are joined in a first joining process with one another in the edge region, with the exception of a filler opening;
h) the sheet-material container (54) is filled via the cannulae;
i) the sheet-material sections (5a, 5b) which lie on top of one another at the cannula end in the area of the filler opening are sealingly joined in a second joining process; and finally
j) the filled and sealed containers of sheet-metal (54) are severed individually or in groups.

2. Process according to claim 1, **characterized in that** in the first joining process the sheet-material sections (5a, 5b) which lie on top of one another are joined only from the bottom up to approximately the top end of the neck section (21, 22) whilst leaving the flat sheet-material sections (5a, 5b) above the neck section (21, 22) unconnected, subsequently the sheet-material sections (5a, 5b) are expanded in the area of the cannula end and the sheet-material container (54) is filled through the expansion, the expansion is cancelled, and finally the sheet-material sections (5a, 5b) are sealingly joined in the second connecting process from above the cannula end to at least the joining area of the first joining process.

3. Process according to claim 2, **characterized in that**
a) in a moving sheet-material (5), on at least one side of a middle line ("M") of the sheet-material (5) which extends in the conveying direction, container parts (17, 18), the axes of which are horizontally oriented during the deep-drawing process and are positioned vertically on the middle line ("M"), are continuously deep-drawn in a deep-drawing station (4);
b) thereafter, within a path "L", the sheet-material (5) is heated in a heating station (6) at least in its middle region to a material-specific temperature "T₁", which permits deformation below plastification, and which continuously folds on top of each other the sheet-material sections (5a, 5b) located on both sides of the middle line ("M") until the sheet-material sections (5a. 5b) make contact in a perpendicular plane;
c) the sheet-material sections (5a, 5b) in the edge regions of the at least one deep-drawn container part (15, 16) are joined in a first sealing station (7) from the bottom up to approximately the top end of the neck section (21, 22), but not in the upper area of the cannulae;
d) the sheet-material composite coming from the first sealing station (7) is expanded above the joint produced in the sealing station (7) up to the sheet-material edges including the cannula end, and the sheet-material composite is in its expanded state passed through a filling station (8) where the sheet-material containers (54) are filled via the cannulae;
e) the sheet-material composite is passed, with its expansion cancelled, from the filling station (8) to a second sealing station (9), where previously unconnected edge regions around the cannulae are joined;
f) on both sides of the cannulae in the joined edge region are produced weak zones (58, 59) for twisting off the upper cannula end; and finally
g) the filled and sealed sheet-material containers (54) or punched out individually or in groups.

4. Process according to claim 3, **characterised in that** the sheet-material (5) is passed in the heating station (6) under a heating device (33) which heats the middle region ("M") of the sheet-material (5) from above.

5. Process according to claim 3, **characterised in that** the sheet-material (5) is passed in the heating station (6) over a heating device (34) which touches the sheet-material (5) in the area of the folding line (36).

6. Process according to claim 1, **characterised in that** the sheet-material composite, after having left the second sealing station (9), is passed through a cooling station (9a), wherein the sealing zones (53) produced in the second sealing station (9) are cooled by pressing on cooling elements which correspond with the sealing zones.

7. Device for the manufacture of bottleshaped containers of sheet-material (54), which are filled with pourable substances and comprise a bottom arranged as a standing-up surface, by means of a deep-drawing tool (27) comprising a tool surface (29) and in which is arranged at least one cavity mould (F15, F16) per container, and wherein merging forming surfaces (F17, F18, F19, F20̸, F21, F22) are arranged for the production of a bottom part (17, 18) which extends perpendicularly to the tool surface (29), a container wall (19, 20̸) and a neck section (21, 22), **characterised in that** the device comprises the following stations for continuous production and filling of deep-drawn containers:
a) a storage station (1) of a sheet-material roll (2);
b) a conveyer (3, 3a) for the transport of sheet-material (5) pulled off the sheet-material roll in a specified conveying direction along a sheet-material path;
c) a deep-drawing station (4), which is positioned in the sheet-material path, with the aforedescribed deep-drawing tool (27) for continuous deep-drawing of container parts (15, 16) from the sheet-material (5) which is transported over, and resting on the tool surface (29), on at least one side of the sheet-material's middle line "M" which extends in the conveying direction, wherein the deep-drawing tool (27) comprises additional forming surfaces (F23, F24) for simultaneous deep-drawing of cannula elements (23, 24) extending from the neck section (21, 22), and the axes of the forming surfaces (F21, F22, F23 and F24) for the neck sections (21, 22) and the cannulae elements (23, 24) extend perpendicularly to the conveying direction (arrow 31);
d) a heating station (6) which extends in the conveying direction over a path "L" of the sheet-material path, having in the middle region of the sheet-material path at least one heating device (33, 34), wherein the sheet-material sections (5a, 5b) located on both sides of the middle line "M" are folded upwards by a guide, commencing from its stretched horizontal position gradually around the middle line "M" up to mutual contact in a perpendicular plane;
e) a first sealing station (7), wherein the sheet-material sections (5a, 5b) are joined into a sheet-material composite in the edge regions of the at least one deep-drawn container part (15, 16) from the bottom part (17, 18) up to approximately the top end of the neck section (21, 22), but not in the thereabove positioned area of the cannula element (23, 24), and not in the top edges (5c, 5d) of the sheet-material;
f) a filling station (8), at the entry side (E) of which is arranged the start of an expanding means (45) positioned in the path of the sheet-material composite, at the two sides (45a, 45b) of which the top edges (5c, 5d) of the sheet-material (5) are passed by whilst expanding the upper cannula end (23a), wherein the filling station (8) comprises at least one filler socket (46), which is entered from the top between the expanded edges (5c, 5d) of the sheet-material (5) up to the respective cannula (23, 24) and retracted on completion of a filling process;
g) a second sealing station (9), wherein the sheet-material sections (5a, 5b) are additionally joined in previously unconnected edge regions of the sheet-material container including the edge regions around the cannulae (23, 24);
h) a first punching station (10̸) for producing a twist-of aid (57) by forming weak zones (58, 59) on both sides of the cannulae (23, 24); and
i) a second punching station (11) for separation of at least one filled sheet-material container (54) from the sheet-material composite whilst cutting into the weak zones (58, 59).

8. Device according to claim 7, **characterised in that** the path "L" in the heating station is at least as long as the "rapport length" (= length of sheet-material over the entirety of simultaneously deep-drawn container parts).

9. Device according to claim 7, **characterised in that** the heating station (6) comprises a first heating device (33) in the form of a heating element arranged above the sheet-material path with its bottom side (35) which is facing towards the sheet-material is defined by surfaces (35a, 35b) which are oriented mirror-symmetrically and V-shaped to one another, wherein the opening angle of the "V" from the side of entry (E) towards the side of exit (A) reduces continuously according to the reducing course of the folding angle between the sheet-material sections, and the intersecting line of the surfaces (35a, 35b) extends directly above the folding line of the sheet-material sections, so that the bottom side of the heating element is everywhere at the smallest possible distance from the passing sheet-material.

10. Device according to claim 7, **characterised in that** the heating station (6) comprises a second heating device (34) in the form of a heating line which is arranged underneath the folding line (36), or the middle line "M" of the sheet-material (5) respectively, and which extends parallel to the folding line.

11. Device according to claim 10̸, **characterised in that** the heating line is mounted in such a manner that it can be lowered.

12. Device according to claim 7, **characterised in that** the first sealing station (7) comprises heated sealing elements (42, 43) with sealing surfaces, which are defined to the area above the bottom part (17, 18) as well as both sides of the container wall (19, 20̸) and at least part of the neck section (21, 22) of the sheet-material container (54).

13. Device according to claim 7, **characterised in that** the expansion device (45) is wedgeshaped towards both the entry side (E) and the outlet side (A).

14. Device according to claim 13, **characterised in that** the expanding device (45) has the shape of a ship's hull.

15. Device according to claim 14, **characterised in that** the expanding device (45) comprises along its longitudinal axis, which extends in the conveying direction of the sheet-material composite, a cut-out (48) which is continuous from top to bottom and through which the at least one filler socket (46) of the filling station (8) can be passed.

16. Device according to claim 7, **characterised in that** the second sealing station (9) comprises heated sealing elements (50̸, 51) with sealing surfaces which surround at least the area on both sides and above the cannula (23, 24).

17. Device according to claim 16, **characterised in that** the sealing surfaces of the second sealing station (9) are dimensioned in such a manner that they also cover, or make contact with, the entire area of the sealing zones of the first sealing station (7).

18. Device according to claim 7, **characterised in that** the second sealing station (9) is adjacent to a cooling station (9a) with cooling elements, the cooling surfaces of which substantially correspond with respect to their position relative to the sheet-material composite and the form and volume, with the position, form and volume of the sealing zones produced in the second sealing station (9)

## Revendications

1. Procédé de fabrication de récipients (54) fabriqués à partir d'une feuille, en forme de bouteille, remplis de substance pouvant couler et présentant un fond conçu en tant que surface d'appui vertical, par:
a) l'emboutissage, à partir d'un matériau en feuille (5) plan et formable, d'au moins par récipient (54), une partie de récipient (15,16) comportant une partie formant fond (17,18) orientée sensiblement perpendiculairement par rapport au plan de la feuille, ainsi qu'une portion formant goulot (21,22), qui s'éloigne de la partie formant fond, ainsi que des zones de bordure qui débordent, à l'extérieur du fond, à la périphérie de la partie de réservoir (15,16),
b) le repliement du matériau en feuille autour d'une ligne de pliage (36) sensiblement située à la position de transition, en forme d'arête, entre la partie formant fond (17,18) et le plan de la feuille,
c) au moyen d'un premier processus de liaison, la liaison, en partant du fond jusqu'au moins aux environs de l'extrémité supérieure de la portion formant goulot (21,22), des parties de feuille (5a,5b) situées des deux côtés de la ligne de pliage (36) et venant l'une sur l'autre dans les zones de bordure après le repliement,
d) le remplissage du récipient (54) par la portion formant goulot (21, 22), et
e) la fermeture du récipient (54),
procédé caractérisé par le fait que,
f) lors de l'emboutissage, se forme, sur la portion respective formant goulot (21,22), une partie formant canule (23,24) qui est orientée, non en direction du fond, mais en direction de la bordure (5c,5d) de la feuille située la plus proche, et qui se termine à une distance "A" de celle-ci qui garantit une liaison ultérieure étanche des parties (5a,5b) de la feuille situées l'une sur l'autre mais tout d'abord non reliées à l'extrémité de la canule,
g) par un premier processus de liaison, on réunit l'une à l'autre les parties (5a,5b) de la feuille situées l'une sur l'autre, dans la zone de bordure, à l'exception d'une ouverture de remplissage à l'extrémité de la canule,
h) on remplit le récipient (54) par la canule,
i) par un second processus de liaison, on réunit de façon étanche l'une à l'autre les parties (5a,5b) de la feuille situées l'une sur l'autre à l'extrémité de la canule, dans la zone de l'ouverture de remplissage et enfin
j) on sépare, individuellement ou en groupes, les récipients (54) remplis et scellés.

2. Procédé selon la revendication 1, caractérisé par le fait que, dans un premier processus de liaison, on ne relie les parties (5a,5b) de la feuille placées l'une sur l'autre, en partant du fond, qu'environ jusqu'à l'extrémité supérieure de la portion formant goulot (21,22), tout en laissant non reliées les parties planes (5a,5b) de la feuille placées au-dessus de la portion formant goulot (21,22), qu'ensuite on expanse les parties (5a,5b) de la feuille dans la zone de l'extrémité de la canule et que l'on remplit le récipient (54) en passant par cette expansion, que l'on supprime l'expansion et qu'enfin, par le second processus de liaison, on relie ensemble de façon étanche les parties (5a,5b) de la feuille, depuis au-dessus de l'extrémité de la canule jusqu'au moins la zone de liaison du premier processus de liaison.

3. Procédé selon la revendication 2, caractérisé par le fait que,
a) sur une feuille en déplacement (5), au moins d'un côté d'une ligne médiane ("M"), orientée selon la direction du transport, de la feuille (5), on emboutit en continu dans une station d'emboutissage (4) des parties de récipient (17,18) dont, pendant le processus d'emboutissage, les axes sont orientés horizontalement et sont perpendiculaires à la ligne médiane ("M").
b) qu'ensuite, au cours d'une course "L", dans une station de chauffage (6), on chauffe la feuille (5), au moins dans sa zone médiane, pour l'amener à une température "T₁", spécifique du matériau, qui permette un formage au-dessous de la plastification et que l'on replie en continu les parties (5a,5b) de la feuille situées des deux côtés de la ligne médiane ("M") jusqu'à contact mutuel des parties (5a,5b) de la feuille dans un plan vertical,
c) que, dans une première station de scellement (7), on relie ensemble les parties (5a, 5b) de la feuille situées dans les zones de bordure de la partie emboutie de récipient (15,16), dont il y a au moins une, depuis le fond jusqu'à environ l'extrémité supérieure de la portion formant goulot (21,22), mais toutefois pas dans la zone supérieure de la canule,
d) que l'on expanse le complexe constitué de la feuille et venant de la première station de scellement (7), au-dessus de la liaison produite dans la première station de scellement (7) et jusqu'aux bordures de la feuille, y compris l'extrémité de la canule et qu'à l'état expansé, on fait passer le complexe constitué de la feuille par une station de remplissage (8) dans laquelle on remplit les récipients (54) en passant par la canule.
e) qu'en supprimant l'expansion, on amène le complexe constitué de la feuille, depuis la station de remplissage (8), à une seconde station de scellement (9) dans laquelle on relie ensemble les zones de bordure, autour de la canule, non reliées jusqu'ici,
f) que, des deux côtés de la canule, dans la zone de bordure reliée, on crée des zones de faiblesse (58,59) permettant de détacher, par torsion, l'extrémité supérieure de la canule et qu'enfin,
g) par estampage, on sépare les récipients (54) remplis et scellés, individuellement ou par groupes.

4. Procédé selon la revendication 3, caractérisé par le fait que, dans la station de chauffage (6), on fait passer la feuille (5) sous un dispositif de chauffage (33) qui, d'en haut, chauffe la zone médiane ("M") de la feuille (5).

5. Procédé selon la revendication 3, caractérisé par le fait que, dans la station de chauffage (6), on fait passer la feuille (5) au-dessus d'un dispositif de chauffage (34) qui vient en contact avec la feuille (5) dans la zone de la ligne de pliage (36).

6. Procédé selon la revendication 1, caractérisé par le fait qu'après sa sortie hors de la seconde station de scellement (9), on fait passer le complexe constitué de la feuille dans une station de refroidissement (9a) dans laquelle les zones de scellement (53), produites dans la seconde station de scellement (9) se refroidissent grâce à la pression de mors de refroidissement correspondant aux zones de scellement.

7. Installation de fabrication de récipients (54), fabriqués à partir d'une feuille, en forme de bouteille, remplis de substances pouvant couler et présentant un fond conçu en tant que surface d'appui vertical, au moyen d'un outil d'emboutissage (27) qui présente une surface d'outil (29), dans lequel est disposé, par récipient, au moins un volume creux de formage (F15, F16) et dans lequel sont disposées des surfaces de formage (F17,F18,F19,F20,F21,F22), se convertissant l'une dans l'autre, pour la production d'une partie (17,18), formant le fond et orientée perpendiculairement à la surface de l'outil (29), d'une paroi de récipient (19,20) et d'une portion formant goulot (21,22), installation caractérisée par le fait que l'intallation prévue pour fabriquer et remplir en continu des récipients emboutis comporte les stations suivantes:
a) une station de stockage (1) pour une feuille en rouleau (2),
b) un dispositif de transport (3,3a) pour le transport de la feuille (5), extraite du rouleau, selon une direction de transport prescrite, le long d'un chemin de la feuille,
c) une station d'emboutissage (4), située sur le chemin de la feuille, comportant l'outil d'emboutissage (27) précédemment décrit pour l'emboutissage, en continu, de parties de récipient (15,16) à partir de la feuille (5) transportée par dessus la surface de l'outil (29) et reposant sur cette surface, d'un côté au moins de la ligne médiane "M" de la feuille orientée selon la direction du transport, étant précisé que l'outil d'emboutissage (27) possède des surfaces de formage supplémentaires (F23,F24) pour l'emboutissage simultané de pièces formant canules (23,24) partant de la portion formant goulot (21,22) et que les axes des surfaces de formage (F21,F22,F23 et F24) pour les portions formant goulot (21,22) et les parties formant canules (23,24) sont orientées perpendiculairement à la direction du transport (flèche 31).
d) une station de chauffage (6) qui s'étend le long d'une course "L" du chemin de la feuille selon la direction du transport et comporte au moins un dispositif de chauffage (33,34) qui est situé dans la zone médiane du chemin de la feuille et dans lequel les parties de la feuille (5a, 5b) situées des deux côtés de la ligne médiane "M" sont, au moyen d'un dispositif de guidage et en partant de leur position horizontale étendue, peu à peu repliées vers le haut autour de la ligne médiane "M" jusqu'à venir en contact mutuel dans un plan vertical,
e) une première station de scellement (7) dans laquelle les parties (5a,5b) de la feuille peuvent se réunir l'une à l'autre, pour donner un complexe, dans les zones de bordure de la partie de récipient emboutie (15,16), dont il y a au moins une, depuis la partie formant le fond (17,18) jusqu'à environ l'extrémité supérieure de la portion formant le goulot (21,22) mais non dans la zone, située par dessus, de la partie formant la canule (23,24) et non aux bordures (5c,5d) de la feuille situées en haut,
f) une station de remplissage (8) du côté entrée (E) de laquelle est disposé le début d'un dispositif d'expansion (45) qui est placé sur le chemin du complexe constitué de la feuille et contre les deux faces (45a,45b) duquel, et le long de ces faces, on peut faire passer les bordures (5c,5d) de la feuille (5) situées en haut, en expansant l'extrémité supérieure (23a) de la canule, étant précisé que la station de remplissage (8) présente au moins une tubulure de remplissage (46) qui, d'en haut, peut s'introduire entre les bordures (5c,5d), expansées, de la feuille (5) jusque dans la canule respective (23,24) et, une fois terminé le processus de remplissage, en être à nouveau extraite,
g) une seconde station de scellement (9) dans laquelle les parties (5a,5b) de la feuille peuvent en complément, se réunir l'une à l'autre dans les zones de bordure, non reliées jusqu'ici, du récipient, y compris les zones de bordure situées autour de la canule (23,24),
h) une première station d estampage (10) pour produire un auxiliaire (57) de séparation par torsion en formant des lignes de faiblesse (58,59) des deux côtés de la canule (23,24), et
i) une seconde station d'estampage (11) pour, en cisaillant les lignes de faiblesse (58,59), séparer du complexe constitué de la feuille au moins un récipient rempli (54).

8. Installation selon la revendication 7, caractérisée par le fait que la course "L" effectuée dans la station de chauffage est au moins aussi longue que la "longueur de rapport" (= longueur de la feuille mesurée sur la totalité des parties de récipient embouties simultanément).

9. Installation selon la revendication 7, caractérisée par le fait que la station de chauffage (6) présente un premier dispositif de chauffage (33) conçu sous forme d'un élément de chauffage qui est disposé au-dessus du chemin de la feuille et dont la face inférieure (35) orientée vers la feuille, est limitée par des surfaces (35a,35b) symétriques par rapport à un plan et orientées l'une vers l'autre en forme de V, étant précisé que l'angle d'ouverture du "V" décroît de façon continue, depuis le côté entrée (E) jusqu'au côté sortie (A), à proportion de l'allure décroissante de l'angle de pliage entre les parties de la feuille, et que la ligne de sommet des surfaces (35a, 35b) passe directement le long de la ligne de pliage des parties de la feuille de façon telle que la face inférieure de l'élément de chauffage se trouve, en toutes les positions à la distance la plus faible possible de la feuille qui passe le long de cet élément.

10. Installation selon la revendication 7, caractérisée par le fait que la station de chauffage (6) présente un second dispositif de chauffage (34) qui est conçu sous forme d'un élément linéaire chauffant disposé sous la ligne de pliage (36), ou ligne médiane "M" de la feuille (5) et qui est orienté parallèlement à la ligne de pliage.

11. Installation selon la revendication 10, caractérisée par le fait que l'élément linéaire chauffant est porté de façon à pouvoir descendre.

12. Installation selon la revendication 7, caractérisée par le fait que la première station de scellement (7) présente des mors de scellement chauffants (42,43) avec des surfaces de scellement qui sont limitées à la zone située au-dessus de la partie formant le fond (17,18) ainsi que des deux côtés de la paroi du récipient (19,20) et d'au moins une partie de la portion formant le goulot (21,22) du récipient (54).

13. Installation selon la revendication 7, caractérisée par le fait que le dispositif d'expansion (45) a la forme d'un coin en allant vers le côté entrée et vers le côté sortie (A).

14. Installation selon la revendication 13, caractérisée par le fait que le dispositif d'expansion (45) a la forme d'une coque de bateau.

15. Installation selon la revendication 14, caractérisée par le fait que le dispositif d'expansion (45) présente, le long de son axe longitudinal orienté selon la direction du transport du complexe constitué de la feuille, un évidement (48) qui traverse du haut vers le bas et par lequel on peut faire passer les tubulures de remplissage (46), dont il y a au moins une, de la station de remplissage (8).

16. Installation selon la revendication 7, caractérisée par le fait que la seconde station de scellement (9) présente des mors de scellement chauffants (50,51) avec des surfaces de scellement qui comprennent au moins la zone située des deux côtés et au-dessus de la canule (23,24).

17. Installation selon la revendication 16, caractérisée par le fait que les surfaces de scellement de la seconde station de scellement (9) sont dimensionnées de façon à recouvrir ou à saisir également l'ensemble des zones de scellement de la première station de scellement (7).

18. Installation selon la revendication 7, caractérisée par le fait qu'à la seconde station de scellement (9) se raccorde une station de refroidissement (9a) comportant des mors de refroidissement dont les surfaces de refroidissement, en ce qui concerne leur position par rapport au complexe constitué de la feuille et leur forme et leur dimension correspondent essentiellement à la position, la forme et la dimension des zones de scellement produites dans la seconde station de scellement (9).
